Europäisches Patentamt

(19) European Patent Office

Office européen des brevets

(11) Publication number: **0 240 345**
**A2**

## EUROPEAN PATENT APPLICATION

(21) Application number: 87302865.8

(22) Date of filing: 02.04.87

(51) Int. Cl.⁴: **G 02 F 1/133**

(30) Priority: 04.04.86 US 848067

(43) Date of publication of application:
07.10.87 Bulletin 87/41

(84) Designated Contracting States:
AT BE CH DE ES FR GB IT LI LU NL SE

(71) Applicant: SHERWOOD MEDICAL COMPANY
1831 Olive Street
St. Louis, MO 63103 (US)

(72) Inventor: Howard, John Frederick
21 Willow Run
Brookfield Center Connecticut 06805 (US)

Timothy, Earle James
115 Kelseytown Road
Clinton Connecticut 06413 (US)

(74) Representative: Chettle, Adrian John et al
c/o John Wyeth & Brother Limited Huntercombe Lane
South
Taplow Maidenhead Berkshire, SL6 0PH (GB)

(54) **Light modulating display member.**

(57) A light modulating display member, for example a liquid crystal display, has an outwardly facing phosphorescent backing (12) in place of the usual reflective layer. The backing (12) assists reading when the display is in a darkened environment.

FIG.3

EP 0 240 345 A2

**Description**

LIGHT MODULATING DISPLAY MEMBER

The present invention relates to improvements in light modulating display members such as liquid crystal displays (LCD's).

Hospitals are presently using portable electronic patient monitoring devices having liquid crystal displays for periodic monitoring of patient functions such as temperature, blood pressure, pulse and respiration in place of non-electronic devices such as the mercury/glass thermometer. During daylight hours, when sufficient light is available in the patient's room, liquid crystal displays are easy to read. However, in a darkened environment, such as during the sleeping hours, liquid crystal displays require a separate light source for viewing. Incandescent bulbs, light emitting diodes (LED), electroluminescent panels or tritium phosphor light emitters (see Kirk Othmer, Encyclopedia of Chemical Technology, 2nd Ed, Digital Displays, Vol. 7, pp 724-751, at page 732) have been used to illuminate liquid crystal displays. Portable electronic patient monitors without such illuminating devices require the use of a flashlight, or reading the display in an area where ordinary incandescent lighting can be used to illuminate the display. this is a major disadvantage when more than one patient occupies a room requiring the recordal of more than one set of data.

Illuminating devices require a battery and it is desirable that battery be rechargeable and be provided with a portable charging system. A portable electronic patient monitoring device equipped with such illuminating means must be designed to include circuitry for recharging and a charging system which preferably comprises a stand which recharges the electronic monitoring devices while they are not in use. An illuminating device can also add additional cost to the device by requiring a driver circuit. The illuminating device can add from 10% to 15% additional cost to an electronic patient monitor, for example, which can be a serious detriment to commercial exploitation.

The present invention provides a light modulating display member which can be read in a darkened environment and yet does not require an illuminating device. According to the present invention there is provided a light modulating display member having an outwardly facing phosphorescent backing.

In accordance with the invention, portable electronic devices can be provided with passive light modulating displays such as liquid crystal displays that can be made more readable in darkened environments by replacing the reflective surface at the rear of the LCD with a non-current dependent phosphorescent light source. Ambient light charges the phosphorescent light source beneath the display. When the LCD is energised, the phosphorescence will form an illuminated background for positive forms or show illuminated forms in negative display devices. Supportive illumination can be achieved without resort to batteries, additional circuitry, battery recharging means and the accompanying expense. Preferably the phosphorescent backing is a plastic film.

The invention finds particular utility in devices which are carried from room to room on hospital "rounds" and which are subjected to darkened lighting conditions for short periods of time. The invention is adaptable to portable electronic temperature monitors, electronic blood pressure meters, electronic pulse meters, electronic respiration meters and devices combining two or more of these functions, particularly where one display is used to exhibit various bits of data. The electronic means used to convert the patient function data to electrical data are well known and do not form a part of this invention.

Other features of the invention will be apparent from the following description of a preferred embodiment shown, by way of example only, in the accompanying drawings in which:-

Figure 1 is an overall frontal view of the face of a portable electronic temperature monitor;

Figure 2 is a view of the liquid crystal display portion of the temperature monitor attached to an integrated circuit board;

Figure 3 is a cross-section through a liquid crystal display along line 3-3 of Figure 2.

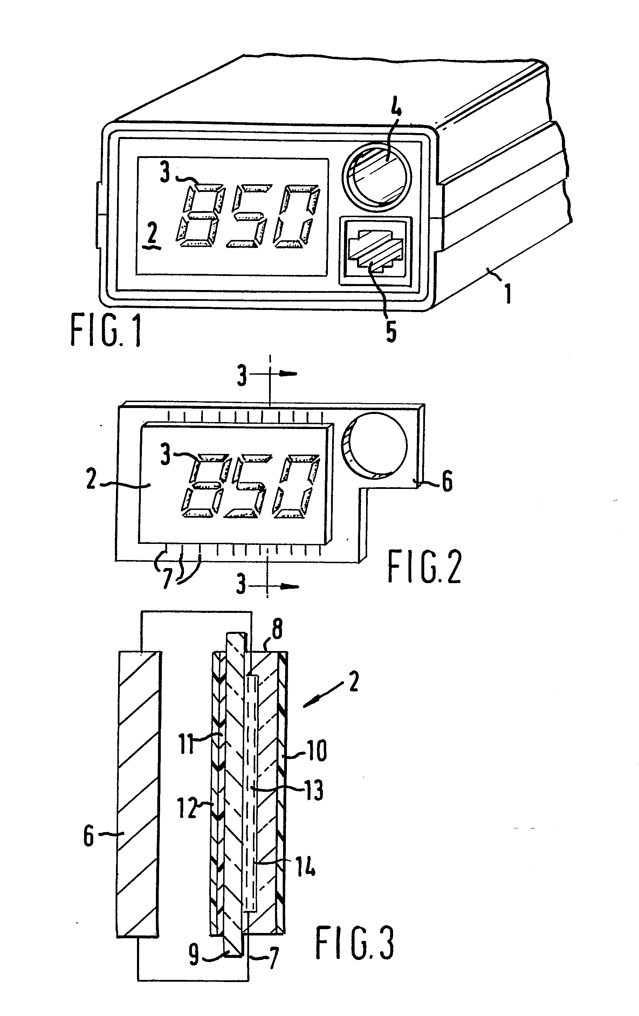

Referring to Figure 1, there is shown the front of a typical electronic temperature monitoring device 1 having a liquid crystal display 2 displaying numerals 3 formed using the standard seven segment pattern. An opening 4 is provided for storing a temperature probe (not shown). The temperature probe also performs the function of switching off the current to the device when the probe is inserted in hole 4 for storage. Modular telephone socket 5 receives the wire (not shown) used to connect the temperature sensitive probe to the monitoring device 1.

Figure 2 shows the LCD 2 separated from the temperature monitoring device 1. The LCD is mounted on a printed circuit board 6 by means of wires 7 which conduct current from the monitoring device to an electrode pattern corresponding to the form to be displayed, such as the seven segment digit forming pattern which forms digits 3.

Figure 3 shows a representative cross-section of a twisted nematic LCD having the present invention incorporated therein. The exact design of the LCD does not form a part of the invention except as regards the omission of the back reflecting layer normally found on liquid crystal devices. This representation is presented to more fully describe the invention.

An LCD 2 is attached to the printed circuit board 6 by wires 7. The LCD is comprised of two pieces of glass 8, 9 having the liquid crystal 13 sandwiched in between; the crystal has an electrode pattern 14 which corresponds to the symbols intended to be displayed.

The outer glass 8 has a light polarizing layer 10 and the inner glass 9 has a light polarizing layer 11 coated thereon. In the twisted nematic LCD, the polarizers are cross polarizers. Phosphorescent layer 12 is applied to the under surface of light polarizer 11 on the inner glass 9, as shown.

The phosphorescent layer can be applied as a layer of pigment in a carrier such as an ink or paint or as a vinyl sheet or plastic extruded part. Due to the method of constructing liquid crystal displays, a flexible plastic film such as vinyl is a preferred carrier. The vinyl can be easily attached to the back of the LCD in place of the diffuser reflector normally used. Heat or preferably spots of adhesive in areas which would not show during operation of the LCD can be used to achieve attachment. The phosphorescent layer is, for example, SPOT-LITE (trade mark) Glow-In-The-Dark Glo paint, Series 5100 and SPOT-LITE (trade mark) Glow-In-The-Dark Phosphorescent vinyl film, Series 4100 and 4400 CLL available from Canrad Hanovia, Inc. of Newark, New Jersey. SPOT-LITE film is a non-radioactive chemical light source incorporated into a flexible vinyl film that glows in total darkness after exposure to artificial or natural light including incandescent and fluorescent lighting; the film is not electrically nor radioactively excited.

The phosphorescent layer contains luminescent pigments activated by natural or artificial light which are based largely on zinc sulphide and zinc-cadmium sulphide that are doped with an activating material such as silver, copper, magnesium and the like to an amount needed for activating, e.g. from about 0.033 to about 1.0 weight percent based on the weight of the pigment. Depending on the activator, under ultraviolet radiation, a wide spectrum of colours can be obtained. Luminescent inorganic pigments of the phosphorescent type, when exposed to day light, ultraviolet light and the like, will store energy and release it as visible light. The inorganic pigments of the phosphorescent type are non-radioactive, and exhibit good persistence. As an example of a pigment of this type is the zinc sulphide phosphor with double activators which is prepared at high temperatures and sold under the name Glow-In-The-Dark (Glo) pigment, Series 1000 by Canrad Hanovia, Inc.

In a conventional LCD, light first enters the outer polarizing layer 10. An electric field is applied to the electrode pattern 14 to arrange the axis of a portion of the liquid crystal 13 into a desired pattern. The polarized light flows uninterrupted and untwisted through the liquid crystal 13 in the areas where pattern has been formed by the electric field to the inner polarizing layer 11. The light is cross polarized leaving a black appearing void which corresponds to the electrode pattern created by the electric field. In the remaining areas, the polarized light is twisted by the liquid crystal 13 so that the inner polarizing layer 11 cannot cancel out the remaining portion of the light. The light which passes through the inner polarizing layer and is normally reflected off a reflective surface in the same position as phosphorescent layer 12, twists 90° as it goes back through the liquid crystal and is passed through the outer polarizing layer 10. A background the colour of the liquid crystal is thus maintained forming an outline for the black voids which were formed by the excitation of the liquid crystal 13 by the electric field.

In the invention, the phosphorescent layer is charged by the light passing theough the polarizers. The phosphorescent layer provides the reflective light which is essential to the operation of an LCD, as would the conventional reflective surface. In addition, the charged phosphorescent surface provides visible contrast when insufficient ambient lighting is available. The phosphorescent layer can be used in both positive and negative displays though the negative display appears to provide more contrast that the positive display.

The degree of light shown in dimly lighted situations depends on the light throwing power of the phosphorescent material. The phosphorescent material is not an equivalent or substitute to incandescent or electroluminescent lighting. The phosphorescent layer assists in deciphering the display where nothing could be read as in the dark. This can be achieved without the battery current loss characteristic of incandescence or electroluminescence or radioactive tritium activated phosphor light emitting devices.

While the invention has been illustrated in regard to a temperature monitoring device, the disclosure is equally applicable to other embodiments falling within the scope of the appended claims.

## Claims

1. A light modulating display member having an outwardly facing phosphorescent backing.

2. A display member according to Claim 1, wherein the member is a liquid crystal display.

3. A display member according to Claim 2, wherein said liquid crystal display comprises an electrode layer and a liquid crystal member encased in transparent sealing means.

4. A display member according to Claim 2 or Claim 3, wherein said liquid crystal display is a twisted nematic type.

5. A display member according to any one of Claims 2 to 4, wherein said liquid crystal display is negative.

6. A display member according to any preceding claim, wherein said phosphorescent backing is an activated zinc sulphide phosphorescent pigment.

7. A display member according to any preceding claim, wherein said phosphorescent layer is a phosphorescent pigmented plastic film.

8. A display member according to Claim 7, wherein said plastic film is a vinyl film.

9. Portable monitoring apparatus incorporating a display member according to any preceding claim.

0240345

FIG.1

FIG.2

FIG.3